# EUROPÄISCHE PATENTSCHRIFT

(11) **EP 3 517 480 B1**
(45) Veröffentlichungstag und Bekanntmachung des Hinweises auf die Patenterteilung: **30.11.2022**
(21) Anmeldenummer: 19150802.7
(22) Anmeldetag: 08.01.2019
(51) Int. Cl.: B66F 9/075, B62D 21/18, B66F 9/10

(54) **GRUNDRAHMEN FÜR EINEN SCHUBMASTSTAPLER**
BASE FRAME FOR A REACH TRUCK
CADRE DE BASE POUR UN CHARIOT ÉLÉVATEUR À MÂT DÉPLAÇABLE

(30) Priorität: 24.01.2018 DE 102018101539
(43) Veröffentlichungstag der Anmeldung: 31.07.2019
(73) Patentinhaber: Jungheinrich Aktiengesellschaft, 22047 Hamburg (DE)
(72) Erfinder: Lemke, Frank, 24568 Kaltenkirchen (DE); Belchev, Boyan, 22083 Hamburg (DE)
(74) Vertreter: Hauck Patentanwaltspartnerschaft mbB

(56) Entgegenhaltungen:
- EP-A1- 3 053 871
- DE-A1- 2 658 696
- DE-A1- 10 312 432
- JP-A- H0 986 894
- US-A- 3 756 350

## Beschreibung

Die Erfindung betrifft einen Grundrahmen für einen Schubmaststapler. Der Grundrahmen nimmt alle wesentlichen, auf das Fahrzeug einwirkenden Lasten auf, insbesondere sind die Räder des Fahrzeugs, das Hubgerüst sowie ein Fahrersitz und/oder eine Fahrerkabine an dem Grundrahmen angeordnet. Grundrahmen für Schubmaststapler weisen zwei Radarme auf, an deren vorderen Enden jeweils eine Radaufnahme angeordnet ist. Zwischen den beiden Radarmen ist das Hubgerüst verschieblich geführt.

Bekannte Grundrahmen für Schubmaststapler sind als Schweißbaugruppe realisiert und umfassen mehrere Querträger, die die beiden Radarme zu einem verwindungssteifen Rahmen verbinden. Es können auch andere Träger, zum Beispiel Längsträger, zum Einsatz kommen. Neben der Verwindungssteifigkeit spielen bei der Konstruktion von Grundrahmen für Schubmaststapler insbesondere möglichst geringe Abmessungen in Fahrzeuglängsrichtung sowie eine optimale Ausnutzung des Bauraums eine wichtige Rolle.

Bei Gabelstaplern, die nicht als Schubmaststapler ausgebildet sind, ist die Verwendung von Gegengewichten zum Ausgleich der von einer aufgenommenen Last ausgeübten Kippmomente üblich. Aus der Druckschrift DE 696 18 699 T2 ist ein solcher Gabelstapler mit einem Gegengewicht bekannt geworden, bei dem das Gegengewicht als Gusserzeugnis ausgebildet ist und neben seiner Funktion als Gegengewicht zugleich als Träger für eine Antriebseinheit und einen Lenkmotor dient.

Aus der Druckschrift EP 3 053 871 A1 ist eine Zugmaschine mit einem Fahrzeugrahmen und einem Gegenwicht bekannt geworden. Das Gegengewicht ist mit vier Gewindebolzen mit dem Fahrzeugrahmen verschraubt. Die Gewindebolzen sind in Längsrichtung des Fahrzeugs ausgerichtet.

Aus der Druckschrift DE 26 58 696 A1 ist ein Gabelstapler mit einem Gegengewicht bekannt geworden, dass in unterschiedlichen Positionen mit einem Fahrzeugrahmen verschraubt werden kann.

Aus der Patentschrift US 3,756,350 ist ein Gabelstapler mit einem Fahrzeugrahmen bekannt geworden. Mit dem Fahrzeugrahmen sind ein Hubgerüst und ein Antriebsmodul verschraubt.

Aus der Druckschrift JP H09 86894 A ist ein Gabelstapler mit einem Fahrzeugrahmen und einem zusätzlichen, unter einer Bodenplatte angeordneten Gewicht bekannt geworden.

Aus der Druckschrift DE 103 12 432 A1 ist ein Grundrahmen für einen Schubmaststapler mit den Merkmalen des Oberbegriffs des Anspruchs 1 bekannt geworden.

Davon ausgehend ist es die Aufgabe der Erfindung, einen verbesserten Grundrahmen für einen Schubmaststapler zur Verfügung zu stellen. Diese Aufgabe wird gelöst durch den Grundrahmen mit den Merkmalen des Anspruchs 1. Vorteilhafte Ausgestaltungen sind in den Unteransprüchen angegeben.

Der Grundrahmen ist für einen Schubmaststapler bestimmt und hat
- eine Radarmbaugruppe, die zwei Radarme umfasst, die an ihren hinteren Enden jeweils eine Lastradaufnahme aufweisen, und
- ein Gegengewicht aus Gusseisen, das an einem vorderen Ende der Radarme angeordnet und mit der Radarmbaugruppe durch eine Anzahl an Schraubverbindungen verbunden ist, wobei
- ein erster Teil der Schraubverbindungen jeweils eine Längsrichtung aufweist, die in einer ersten Richtung ausgerichtet ist, und ein zweiter Teil der Schraubverbindungen jeweils eine Längsrichtung aufweist, die in einer zweiten Richtung, die von der ersten Richtung verschieden ist, ausgerichtet ist.

Die beiden Radarme sind vorzugsweise aus Stahl gefertigt. An den Radarmen kann jeweils eine Führungsschiene für einen Schubmast angeordnet sein. Als weitere Komponente umfasst der Grundrahmen ein Gegengewicht aus Gusseisen, das mit der Radarmbaugruppe durch eine Anzahl an Schraubenverbindungen verbunden ist. Jede Schraubverbindung hat eine Längsrichtung. Diese entspricht derjenigen Richtung, in der die beiden Bauteile durch die Schraubverbindung miteinander verspannt sind, also insbesondere der Längsrichtung einer für die Schraubverbindung verwendeten Schraube oder eines für die Schraubverbindung verwendeten Gewindebolzens. Bei der Erfindung umfasst die Verschraubung zwischen Gegengewicht und Radarmbaugruppe Schraubverbindungen in mindestens zwei unterschiedlichen Richtungen. Dadurch kann das in den Grundrahmen integrierte Gegengewicht einen wesentlichen Beitrag zur Stabilität des Grundrahmens liefern und insbesondere dessen Verwindungssteifigkeit erhöhen.

Das Gegengewicht besteht aus Gusseisen, insbesondere aus einem als Sphäroguss bezeichneten Gusseisen, das Kugelgraphit enthält. Grundsätzlich zeichnet sich Gusseisen durch seine frei wählbare Formgebung aus, was eine optimale Ausnutzbarkeit des Bauraums innerhalb des Grundrahmens begünstigt. Sphäroguss ist darüber hinaus besonders gut bearbeitbar. Mindestens eine der Schraubverbindungen oder alle Schraubverbindungen können eine Gewindebohrung in dem Gegengewicht umfassen. Insbesondere in Verbindung mit Sphäroguss wird auf diese Weise eine stabile und einfach zu montierende Verschraubung ermöglicht.

Anders als Gabelstapler benötigen Schubmaststapler konventioneller Bauart kein Gegengewicht. Eine günstige Gewichtsverteilung kann bei elektrisch angetriebenen Fahrzeugen bereits durch geeignete Anordnung insbesondere der Fahrzeugbatterie erreicht werden. Dies gilt insbesondere bei Verwendung herkömmlicher, schwerer Blei-Säure-Batterien. Beim Einsatz neuerer Batterietechnologien, insbesondere mit Lithium-Ionen-Batterien, kann das bei der Erfindung in den Grundrahmen integrierte Gegengewicht aus Gusseisen jedoch einen wichtigen Beitrag zu einer optimalen Gewichtsverteilung leisten.

In einer Ausgestaltung ist die Radarmbaugruppe eine Schweißbaugruppe, die eine mit den beiden Radarmen verschweißte Querverbindung aufweist. In diesem Fall bildet die Radarmbaugruppe eine vorgefertigte Einheit, die in bewährter Weise hergestellt werden kann. Grundsätzlich ist es jedoch auch möglich, die beiden Radarme auf andere Weise miteinander zu verbinden oder eine mehrteilige Radarmbaugruppe zu verwenden.

In einer Ausgestaltung sind die erste Richtung und die zweite Richtung orthogonal zueinander ausgerichtet. Insbesondere kann eine der beiden Richtungen horizontal und die andere der beiden Richtungen vertikal ausgerichtet sein. Durch eine solche Ausrichtung kann eine optimale Versteifungswirkung des Grundrahmens durch die Verschraubung mit dem Gegengewicht erzielt werden.

In einer Ausgestaltung sind der erste Teil und/oder der zweite Teil der Schraubverbindungen zur Übertragung von Kräften quer zu ihrer jeweiligen Längsrichtung ausgebildet. Hierfür können unterschiedliche Maßnahmen getroffen werden, welche die Übertragbarkeit von Querkräften verbessern. Dies trägt zu einer hohen Verwindungssteifigkeit des Grundrahmens bei.

In einer Ausgestaltung ist der erste Teil und/oder der zweite Teil der Schraubverbindungen zur Ermöglichung eines Toleranzausgleichs quer zu ihrer jeweiligen Längsrichtung ausgebildet. Dies kann beispielsweise durch ein Langloch oder durch eine Bohrung, deren Durchmesser mindestens um die auszugleichende Toleranz größer gewählt ist, als der Durchmesser einer Schraube oder eines Bolzens, erreicht werden. Ein solcher Toleranzausgleich kann insbesondere ausschließlich für einen der beiden Teile der Schraubverbindungen vorgesehen werden, während der andere Teil im Interesse einer optimalen Festigkeit eine genauere Passung aufweist.

In einer Ausgestaltung weist mindestens eine der Schraubverbindungen einen in einer Durchgangsbohrung der Radarmbaugruppe angeordneten Spannstift und eine in den Spannstift eingesetzte Schraube auf. Der Spannstift sorgt für eine formschlüssige Verankerung der Schraube in der Durchgangsbohrung und ist zur Übertragung von Querkräften besonders geeignet.

In einer Ausgestaltung weist mindestens eine der Schraubverbindungen eine zwischen der Radarmbaugruppe und dem Gegengewicht angeordnete, reibwerterhöhende Scheibe auf. Durch diese Maßnahme ist ebenfalls eine besonders gute Übertragung von Querkräften gewährleistet. Die reibwerterhöhende Scheibe kann insbesondere eine Diamantscheibe sein, zum Beispiel eine mit Diamantstaub beschichtete Scheibe.

Die genannten Ausgestaltungen mit einem Spannstift oder eine reibwerterhöhenden Scheibe können insbesondere jeweils für alle Schraubverbindungen eines der beiden Teile eingesetzt werden. Beispielsweise können alle Schraubverbindungen des ersten Teils zur optimalen Übertragung von Querkräften einen Spannstift aufweisen, während alle Schraubverbindungen des anderen Teils mit Toleranzausgleichsmöglichkeit und einer reibwerterhöhenden Scheibe ausgestattet werden können, um gleichzeitig einen Toleranzausgleich und eine optimale Übertragung von Querkräften zu ermöglichen.

In einer Ausgestaltung weist die Querverbindung eine horizontal angeordnete Grundplatte und/oder eine vertikal angeordnete Quertraverse auf. Grundplatte und/oder Quertraverse können plattenförmig und/oder aus Stahl gefertigt sein. Die Quertraverse kann in einem mittleren Abschnitt der Radarme angeordnet sein. Die Grundplatte kann sich von der Quertraverse nach vorn erstrecken, also von den hinteren Enden der Radarme mit den Lastradaufnahmen weg. Die Quertraverse kann in einem vertikalen Abstand von der Grundplatte angeordnet sein. Sie kann über eine Oberkante der Radarme überstehen. Die skizzierte Anordnung von Grundplatte und/oder Quertraverse ist für die Anordnung und Befestigung weiterer Fahrzeugkomponenten an dem Grundrahmen vorteilhaft.

In einer Ausgestaltung besteht der erste Teil der Schraubverbindungen zwischen dem Gegengewicht und der Quertraverse und/oder der zweite Teil der Schraubverbindungen besteht zwischen dem Gegengewicht und der Grundplatte. Grundsätzlich können die Schraubverbindungen zwischen Gegengewicht und Radarmbaugruppe an unterschiedlichen Elementen der Radarmbaugruppe angeordnet werden, zum Beispiel zwischen dem Gegengewicht und einem Radarm. Eine Verschraubung mit der Grundplatte und/oder mit der Quertraverse ist für die angestrebte Versteifungswirkung geeignet und kann zudem besonders einfach montiert werden.

In einer Ausgestaltung weist mindestens eine der Schraubverbindungen einen versenkt angeordneten Schraubenkopf auf, wobei das Material der Schweißbaugruppe hierfür mit einer Durchgangsbohrung mit einem Durchmesser, der größer ist als der Schraubenkopf, und mit einer aufgeschweißten Scheibe, die eine kleinere Durchgangsbohrung aufweist, versehen ist. Die Scheibe kann insbesondere kreisförmig sein. Die kleinere Durchgangsbohrung ist insbesondere konzentrisch zu der größeren Durchgangsbohrung angeordnet. Gemeinsam bilden die beiden Durchgangsbohrungen eine Stufe und die größere Durchgangsbohrung kann den Schraubenkopf vollständig aufnehmen. Eine versenkte Anordnung der Schraubenköpfe kann insbesondere an der Fahrzeugunterseite für den erforderlichen Schutz sorgen. Die Konstruktion mit der aufgeschweißten Scheibe ermöglicht eine kostengünstige, materialsparende und hoch belastbare Verbindung.

In einer Ausgestaltung bildet eine Oberseite der aufgeschweißten Scheibe eine Kontaktfläche für eine zwischen der Radarmbaugruppe und dem Gegengewicht angeordnete, reibwerterhöhende Scheibe. Diese Lösung ist für die Übertragung von Querkräften günstig und konstruktiv einfach.

In einer Ausgestaltung weist das Gegengewicht eine Ausnehmung auf, die die aufgeschweißte Scheibe aufnimmt. Bei dieser Konstruktion wird die Freiheit bei der Formgebung des gegossenen Gegengewichts ausgenutzt, um Gegengewicht und Radarmbaugruppe in besonders geringem Abstand voneinander zu befestigen. Die durch die Scheibe vergrößerte Materialstärke der Radarmbaugruppe wird durch die Ausnehmung kompensiert.

In einer Ausgestaltung bildet ein Boden der Ausnehmung eine Kontaktfläche für eine zwischen der Radarmbaugruppe und dem Gegengewicht angeordnete, reibwerterhöhende Scheibe. Insbesondere kann die reibwerterhöhende Scheibe dann mit einer Seite unmittelbar am Boden der Ausnehmung mit der anderen Seite unmittelbar an der aufgeschweißten Scheibe anliegen.

In einer Ausgestaltung erstreckt sich das Gegengewicht über die gesamte Breite des Grundrahmens und/oder der Schwerpunkt des Gegengewichts ist unterhalb des Schwerpunkts der Radarmbaugruppe und/oder unterhalb einer Oberkante der Radarme angeordnet. Dadurch kann das Gegengewicht einen wesentlichen Beitrag zur Funktion des Grundrahmens sowie zu einem niedrigen Schwerpunkt des Schubmaststaplers leisten.

In einer Ausgestaltung weist das Gegengewicht Befestigungsmittel zur Befestigung einer Fahrerkabine und/oder eines Antriebsradträgers an dem Gegengewicht auf. Demnach trägt das Gegengewicht nicht nur zur Versteifung des Grundrahmens und zu einer optimalen Gewichtsverteilung bei, sondern erfüllt zugleich eine Zusatzfunktion als Träger der genannten Komponenten des Schubmaststaplers.

In einer Ausgestaltung richtet sich die Erfindung auf einen Schubmaststapler mit einem Grundrahmen nach einem der Ansprüche 1 bis 15. Der Schubmaststapler kann insbesondere einen Schubmast und einen elektrischen Fahrantrieb mit einer Antriebsbatterie aufweisen. Insbesondere kann der Schubmaststapler eine Fahrerkabine und/oder einen Antriebsradträger aufweisen, die an dem Gegengewicht befestigt sind.

Nachfolgend wird die Erfindung anhand eines in Figuren dargestellten Ausführungsbeispiels näher erläutert. Es zeigen:
- Fig. 1: einen Grundrahmen für einen Schubmaststapler in einer perspektivischen Ansicht schräg von oben,
- Fig. 2: den Grundrahmen aus Fig. 1 in einer Explosionsdarstellung,
- Fig. 3: den Grundrahmen aus Fig. 1 in einer perspektivischen Ansicht schräg von unten,
- Fig. 4: das Gegengewicht des Grundrahmens aus Fig. 1 in einer perspektivischen Ansicht schräg von hinten/unten,
- Fig. 5: eine vergrößerte Darstellung des Details A aus Fig. 3,
- Fig. 6: eine vergrößerte Darstellung des Details B aus Fig. 2 und
- Fig. 7: einen Schubmaststapler mit dem Grundrahmen aus Fig. 1 in einer perspektivischen Ansicht schräg von vorn/unten.

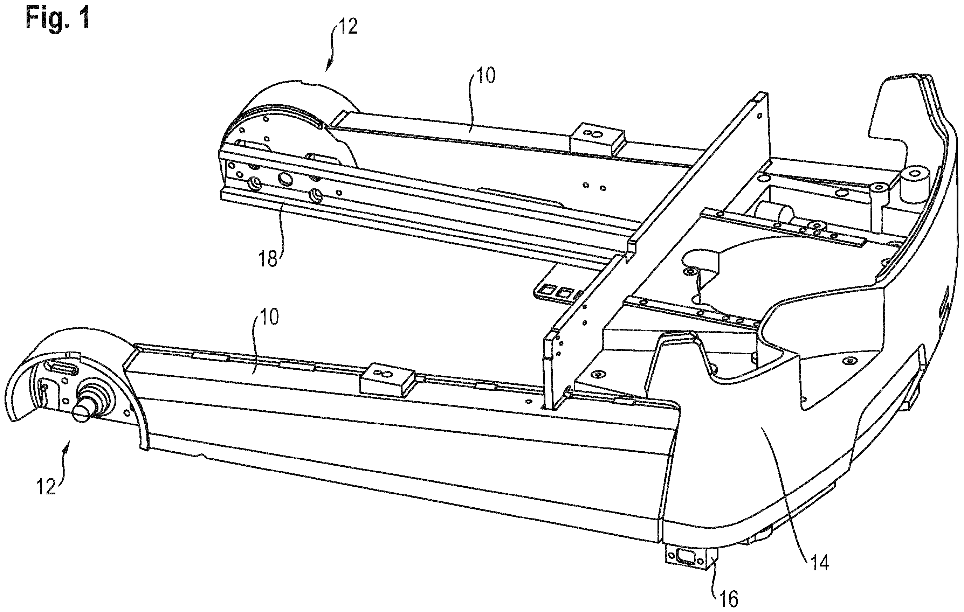

Der Grundrahmen aus Fig. 1 weist zwei Radarme 10 auf, an deren hinteren Enden jeweils eine Lastradaufnahme 12 erkennbar ist. Jeder der Radarme 10 weist an seiner Innenseite eine Führungsschiene 18 für den Schubmast auf. Im Sprachgebrauch dieser Anmeldung wird das von den Lastradaufnahmen 12 entfernte Ende des Grundrahmens bzw. des Schubmaststaplers als vorderes Ende bezeichnet.

Am vorderen Ende der Radarme 10 befindet sich ein Gegengewicht 14 aus Gusseisen, das sich im Wesentlichen über die gesamte Breite des Grundrahmens erstreckt. Das vordere Ende des Gegengewichts 14 bildet zugleich das vordere Ende des Fahrzeugs. Es weist eine leicht abgerundete Form auf. Am unteren Ende des Gegengewichts 14 ist an beiden Seiten jeweils ein Befestigungssockel 16 für ein Stützelement, das auch als Stützpilz bezeichnet wird, angeordnet.

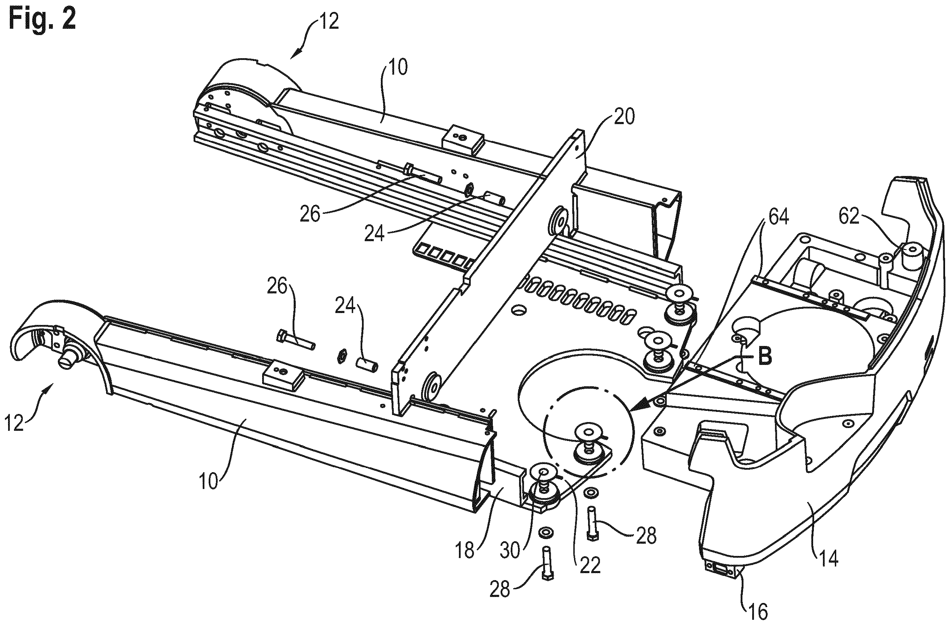

Weitere Einzelheiten sind besser in der Figur 2 erkennbar. Man erkennt dort, dass eine Querverbindung zwischen den beiden Radarmen 10 von einer Quertraverse 20 und von einer Grundplatte 22 gebildet ist. Die Quertraverse 20 ist eine vertikal angeordnete Stahlplatte. Sie ist vor einem zur Aufnahme des Schubmasts bestimmten Raum, an einer mittleren Position der Radarme 10, mit den Radarmen 10 verschweißt. Im gezeigten Ausführungsbeispiel ist die Radarmbaugruppe also eine Schweißbaugruppe mit einer Querverbindung.

Die Grundplatte 22 ist eine horizontal angeordnete Stahlplatte. Sie erstreckt sich in Fahrzeuglängsrichtung etwa von der Position der Quertraverse 20 aus nach vorn im Wesentlichen bis an das vordere Ende des Gegengewichts 14 bzw. des Fahrzeugs heran. Die Quertraverse 20 weist einen vertikalen Abstand zur Grundplatte 22 auf.

Das Gegengewicht 14 besteht aus Sphäroguss. Es weist einen hinteren Abschnitt auf, der zwischen den vorderen Enden der Radarme 10 angeordnet ist, sowie einen sich daran nach vorn anschließenden, breiteren Abschnitt, der sich über die gesamte Breite des Grundrahmens erstreckt und der ein vorderes Ende des Grundrahmens bildet.

Figur 2 verdeutlicht außerdem die Anordnung von sechs Schraubverbindungen zwischen der Schweißbaugruppe und dem Gegengewicht 14. Ein erster Teil dieser Schraubverbindungen, nämlich die beiden zwischen der Quertraverse 20 und dem Gegengewicht 14, weisen jeweils eine Durchgangsbohrung in der Quertraverse 20, einen in diese Durchgangsbohrung eingesetzten Spannstift 24 sowie eine in den Spannstift 24 eingesetzte Schraube 26 auf. Die nicht im Einzelnen dargestellten Gewindeabschnitte der Schrauben 26 werden in in Fig. 2 verdeckte Gewindebohrungen im Gegengewicht 14 eingeschraubt.

Ein zweiter Teil der Schraubverbindungen, nämlich die vier zwischen Grundplatte 22 und Gegengewicht 14 ausgebildeten Schraubverbindungen, weisen jeweils eine Durchgangsbohrung in der Grundplatte 22, eine in die Durchgangsbohrung eingesetzte Schraube 28 und eine Diamantscheibe 30 auf. Diese Schrauben 28 sind mit nicht im Einzelnen dargestellten Gewindeabschnitten ebenfalls in Gewindebohrungen im Gegengewicht 14 eingeschraubt. Auch diese Gewindebohrungen im Gegengewicht 14 sind in Fig. 2 nicht sichtbar.

In der Explosionsdarstellung der Figur 2 sind die Schrauben 26, 28 jeweils in Längsrichtung der Schraubverbindungen eingezeichnet. Man erkennt, dass die Schraubverbindungen mit den Schrauben 26, also der erste Teil der Schraubverbindungen, horizontal ausgerichtet ist, während die Schraubverbindungen mit den Schrauben 28, als der zweite Teil der Schraubverbindungen, vertikal ausgerichtet ist.

Weiterhin zeigt Fig. 2 Befestigungsmittel für eine Fahrerkabine in Form von zwei nahe den vorderen Ecken des Gegengewichts 14 ausgebildeten Gewindedomen 62, die eine definierte Anlagefläche für eine Fahrerkabinentragstruktur und eine Gewindebohrung aufweisen. Zur Befestigung eines Antriebsradträgers/eines Fahrantriebs weist das Gegengewicht 14 zudem weitere, in zwei Reihen 64 angeordnete Befestigungsbohrungen auf.

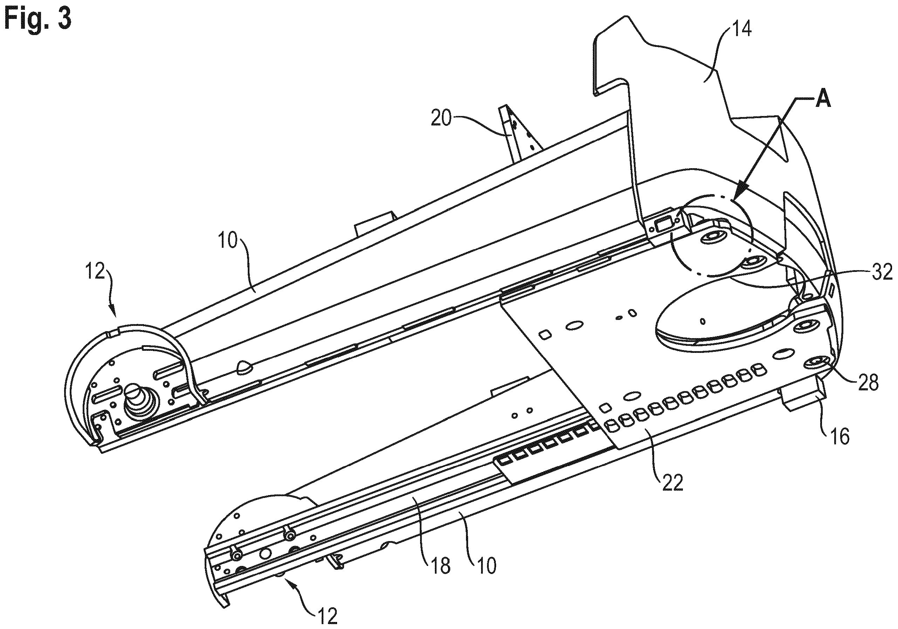

In der Ansicht der Figur 3 des Grundrahmens schräg von unten erkennt man besonders gut eine kreisförmige, zum vorderen Rand der Grundplatte 22 offene Ausnehmung 32 für ein Antriebsrad, dessen Antriebsradträger am Gegengewicht 14 gelagert ist. Ebenfalls erkennbar ist, dass die Köpfe der Schrauben 28 in der Grundplatte 22 versenkt angeordnet sind.

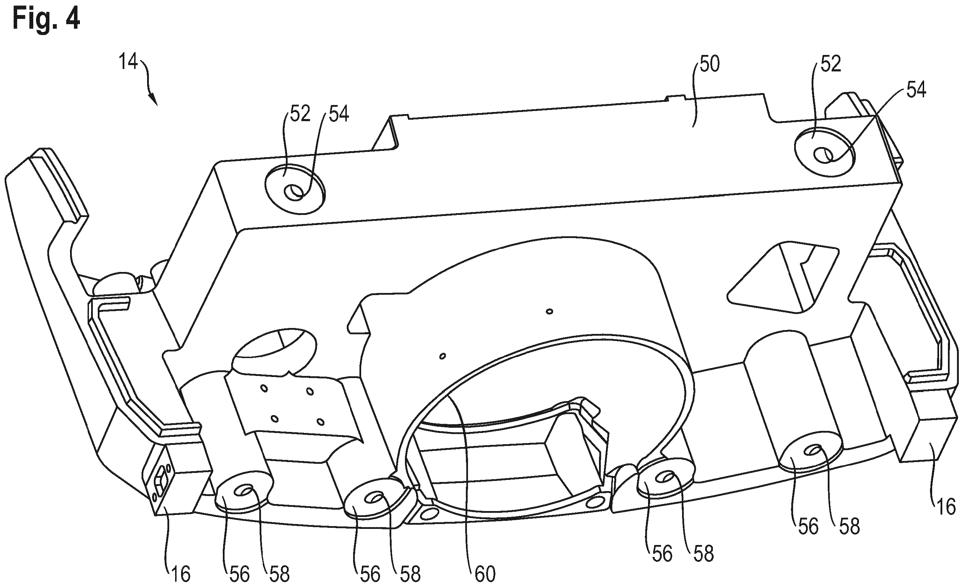

In Fig. 4 ist das Gegengewicht 14 allein dargestellt. Man erkennt an dem genannten hinteren, zwischen den Radarmen 10 angeordneten Abschnitt des Gegengewichts 14 eine hintere Fläche 50, die der Quertraverse 20 zugeordnet ist. In der hinteren Fläche 50 sind zwei kreisförmige Ausnehmungen 52 mit mittigen Gewindebohrungen 54 zur Aufnahme der Schrauben 26 gezeigt. Diese Gewindebohrungen 54 sind als Stufenbohrungen ausgeführt: In einem hinteren Längsabschnitt weisen sie einen vergrößerten Durchmesser auf, der einen Abschnitt eines der Spannstifte 24 aufnimmt. An einer Stufe schließt sich ein vorderer Längsabschnitt mit kleinerem Durchmesser an, der ein Innengewinde zum Einschrauben der Schraube 26 aufweist. Am unteren, vorderen Rand des Gegengewichts 14 sind weitere Ausnehmungen 56 mit mittigen Gewindebohrungen 58 zur Aufnahme der Schrauben 28 erkennbar. Das Gegengewicht 14 weist eine Öffnung 60 zur Aufnahme eines Antriebsrads und Antriebsradträgers auf. Diese Öffnung 60 ist korrespondierend zur Ausnehmung 32 in der Grundplatte 22 bemessen und angeordnet.

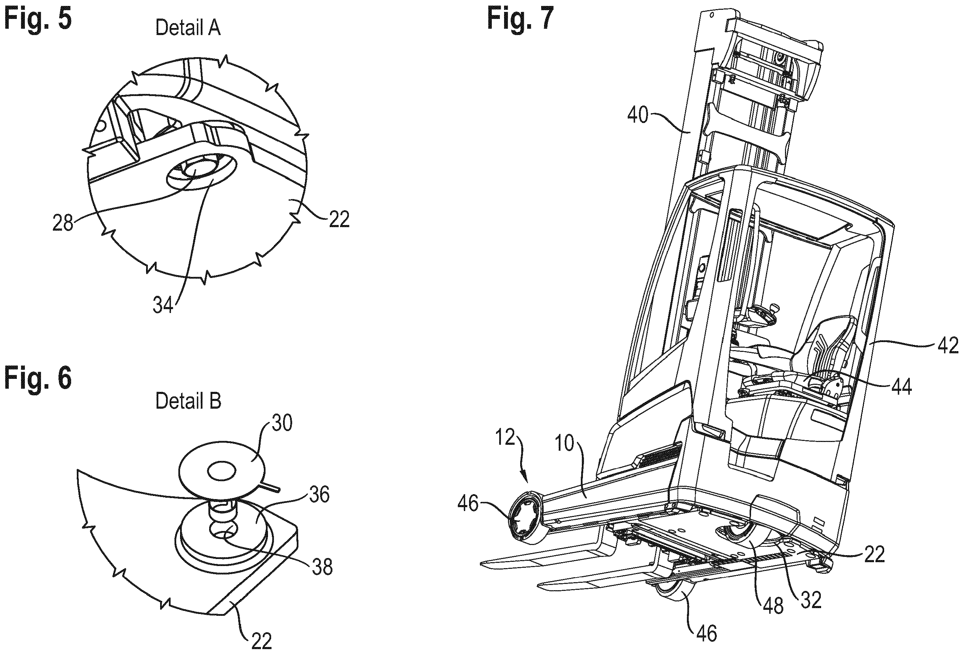

Die in Figur 5 dargestellte Vergrößerung des Details A aus Figur 3 zeigt genauer, dass die Grundplatte 22 eine Durchgangsbohrung 34 mit einem Durchmesser aufweist, der deutlich größer ist, als der Durchmesser des Kopfs der Schraube 28. Der Kopf der Schraube 28 ist vollständig innerhalb dieser Durchgangsbohrung 34 angeordnet und steht nach unten nicht über die Grundplatte 22 über.

Das in Fig. 6 vergrößert dargestellte Detail B aus Figur 2 zeigt die andere Seite dieser Schraubverbindung, also mit Blickrichtung schräg von oben. Man erkennt dort, dass oberhalb der Durchgangsbohrung 34 der Grundplatte 22 eine kreisförmige Scheibe 36 auf die Grundplatte 22 aufgeschweißt ist, wobei die Scheibe 36 ihrerseits eine kleinere Durchgangsbohrung 38 aufweist. Diese Durchgangsbohrung 38 nimmt einen Schaftabschnitt der Schraube 28 auf. Die in Fig. 5 dem Betrachter zugewandte Oberseite der aufgeschweißten Scheibe 36 bildet eine Kontaktfläche für die Diamantscheibe 30. Die Oberseite der Diamantscheibe 30 liegt am Boden einer in Fig. 4 gezeigten Ausnehmung 56 im Gegengewicht 14 an, die die aufgeschweißte Scheibe 36 aufnimmt.

Figur 7 zeigt einen Schubmaststapler mit dem Grundrahmen aus Fig. 1 in einer perspektivischen Ansicht schräg von vorn/unten. Der Schubmaststapler ist elektrisch angetrieben und weist ein verschieblich angeordnetes Hubgerüst 40, eine Fahrerkabine 42 und einen Fahrersitz 44 auf. Man erkennt, dass die Lastradaufnahmen 12 der beiden Radarme 10 jeweils ein Lastrad 46 aufgenommen haben und dass in der Ausnehmung 32 der Grundplatte 22 ein lenkbares Antriebsrad 48 angeordnet ist.

### Liste der verwenden Bezugszeichen:

- 10: Radarm
- 12: Lastradaufnahme
- 14: Gegengewicht
- 16: Befestigungssockel für Stützelement
- 18: Führungsschiene
- 20: Quertraverse
- 22: Grundplatte
- 24: Spannstift
- 26: Schraube
- 28: Schraube
- 30: Diamantscheibe
- 32: Ausnehmung
- 34: Durchgangsbohrung
- 36: aufgeschweißte Scheibe
- 38: Durchgangsbohrung
- 40: Hubgerüst
- 42: Fahrerkabine
- 44: Fahrersitz
- 46: Lastrad
- 48: Antriebsrad
- 50: hintere Fläche
- 52: Ausnehmung
- 54: Gewindebohrung
- 56: Ausnehmung
- 58: Gewindebohrung
- 60: Öffnung
- 62: Gewindedom
- 64: Reihe mit Befestigungsbohrungen

## Patentansprüche

1. Grundrahmen für einen Schubmaststapler mit
• einer Radarmbaugruppe, die zwei Radarme (10) umfasst, die an ihren hinteren Enden jeweils eine Lastradaufnahme (12) aufweisen, und
• einem Gegengewicht (14) aus Gusseisen, das an einem vorderen Ende der Radarme (12) angeordnet und mit der Radarmbaugruppe durch eine Anzahl an Schraubverbindungen verbunden ist, wobei
• ein erster Teil der Schraubverbindungen jeweils eine Längsrichtung aufweist, die in einer ersten Richtung ausgerichtet ist, **dadurch gekennzeichnet, dass**
• ein zweiter Teil der Schraubverbindungen jeweils eine Längsrichtung aufweist, die in einer zweiten Richtung, die von der ersten Richtung verschieden ist, ausgerichtet ist.

2. Grundrahmen nach Anspruch 1, **dadurch gekennzeichnet, dass** die Radarmbaugruppe eine Schweißbaugruppe ist, die eine mit den beiden Radarmen (10) verschweißte Querverbindung aufweist.

3. Grundrahmen nach Anspruch 1 oder 2, **dadurch gekennzeichnet, dass** die erste Richtung und die zweite Richtung orthogonal zueinander ausgerichtet sind.

4. Grundrahmen nach einem der Ansprüche 1 bis 3, **dadurch gekennzeichnet, dass** der erste Teil und/oder der zweite Teil der Schraubverbindungen zur Übertragung von Kräften quer zu ihrer jeweiligen Längsrichtung ausgebildet sind.

5. Grundrahmen nach einem der Ansprüche 1 bis 4, **dadurch gekennzeichnet, dass** der erste Teil und/oder der zweite Teil der Schraubverbindungen zur Ermöglichung eines Toleranzausgleichs quer zu ihrer jeweiligen Längsrichtung ausgebildet ist.

6. Grundrahmen nach einem der Ansprüche 1 bis 5, **dadurch gekennzeichnet, dass** mindestens eine der Schraubverbindungen einen in einer Durchgangsbohrung der Radarmbaugruppe angeordneten Spannstift (24) und eine in den Spannstift (24) eingesetzte Schraube (26) aufweist.

7. Grundrahmen nach einem der Ansprüche 1 bis 6, **dadurch gekennzeichnet, dass** mindestens eine der Schraubverbindungen eine zwischen der Radarmbaugruppe und dem Gegengewicht (14) angeordnete, reibwerterhöhende Scheibe aufweist.

8. Grundrahmen nach Anspruch 2 oder nach Anspruch 2 in Kombination mit einem der Ansprüche 3 bis 7, **dadurch gekennzeichnet, dass** die Querverbindung eine horizontal angeordnete Grundplatte (22) und/oder eine vertikal angeordnete Quertraverse (20) aufweist.

9. Grundrahmen nach Anspruch 8, **dadurch gekennzeichnet, dass** der erste Teil der Schraubverbindungen zwischen dem Gegengewicht (14) und der Quertraverse (20) besteht und/oder dass der zweite Teil der Schraubverbindungen zwischen dem Gegengewicht (14) und der Grundplatte (22) besteht.

10. Grundrahmen nach einem der Ansprüche 1 bis 9, **dadurch gekennzeichnet, dass** mindestens eine der Schraubverbindungen einen versenkt angeordneten Schraubenkopf aufweist, wobei das Material der Radarmbaugruppe hierfür mit einer Durchgangsbohrung (34) mit einem Durchmesser, der größer ist als der Schraubenkopf, und mit einer aufgeschweißten Scheibe (36), die eine kleinere Durchgangsbohrung (38) aufweist, versehen ist.

11. Grundrahmen nach Anspruch 10, **dadurch gekennzeichnet, dass** eine Oberseite der aufgeschweißten Scheibe (36) eine Kontaktfläche für eine zwischen der Radarmbaugruppe und dem Gegengewicht (14) angeordnete, reibwerterhöhende Scheibe bildet.

12. Grundrahmen nach Anspruch 10 oder 11, **dadurch gekennzeichnet, dass** das Gegengewicht (14) eine Ausnehmung (52, 56) aufweist, die die aufgeschweißte Scheibe (36) aufnimmt.

13. Grundrahmen nach Anspruch 12, **dadurch gekennzeichnet, dass** ein Boden der Ausnehmung (52, 56) eine Kontaktfläche für eine zwischen der Radarmbaugruppe und dem Gegengewicht (14) angeordnete, reibwerterhöhende Scheibe bildet.

14. Grundrahmen nach einem der Ansprüche 1 bis 13, **dadurch gekennzeichnet, dass** sich das Gegengewicht (14) über die gesamte Breite des Grundrahmens erstreckt und/oder dadurch, dass der Schwerpunkt des Gegengewichts (14) unterhalb des Schwerpunkts der Radarmbaugruppe und/oder unterhalb einer Oberkante der Radarme (10) angeordnet ist.

15. Grundrahmen nach einem der Ansprüche 1 bis 14, **dadurch gekennzeichnet, dass** das Gegengewicht (14) Befestigungsmittel zur Befestigung einer Fahrerkabine (42) und/oder eines Antriebsradträgers an dem Gegengewicht (14) aufweist.

16. Schubmaststapler mit einem Grundrahmen nach einem der Ansprüche 1 bis 15, insbesondere mit einer an dem Gegengewicht (14) befestigten Fahrerkabine (42) und/oder mit einem an dem Gegengewicht (14) befestigten Antriebsradträger.

## Claims

1. A base frame for a reach truck comprising
• a wheel arm assembly comprising two wheel arms (10), which each have a load wheel mount (12) on their rear ends, and
• a counterweight (14) made of cast iron, which is arranged on a front end of the wheel arms (12) and is connected to the wheel arm assembly by a number of bolt connections, wherein
• a first subset of the bolt connections each has a longitudinal direction that is aligned in a first direction, **characterized in that**
• a second subset of the bolt connections each has a longitudinal direction that is aligned in a second direction which is different from the first direction.

2. The base frame according to claim 1, **characterized in that** the wheel arm assembly is a welded assembly that has a transverse connection welded to the two wheel arms (10).

3. The base frame according to claim 1 or 2, **characterized in that** the first direction and the second direction are aligned orthogonally to each other.

4. The base frame according to one of claims 1 to 3, **characterized in that** the first subset and/or the second subset of the bolt connections are designed to transmit forces transversely to their respective longitudinal direction.

5. The base frame according to one of claims 1 to 4, **characterized in that** the first subset and/or the second subset of the bolt connections are designed to enable a tolerance compensation transversely to their respective longitudinal direction.

6. The base frame according to one of claims 1 to 5, **characterized in that** at least one of the bolt connections has a spring pin (24) arranged in a through-hole of the wheel arm assembly and a bolt (26) inserted into the spring pin (24).

7. The base frame according to one of claims 1 to 6, **characterized in that** at least one of the bolt connections has a disk that increases the friction coefficient arranged between the wheel arm assembly and the counterweight (14).

8. The base frame according to claim 2 or according to claim 2 in combination with one of claims 3 to 7, **characterized in that** the transverse connection has a horizontally arranged base plate (22) and/or a vertically arranged crosspiece (20).

9. The base frame according to claim 8, **characterized in that** the first subset of the bolt connections is between the counterweight (14) and the crosspiece (20) and/or that the second subset of the bolt connections is between the counterweight (14) and the base plate (22).

10. The base frame according to one of claims 1 to 9, **characterized in that** at least one of the bolt connections has a countersunk bolt head, wherein the material of the wheel arm assembly is provided for this purpose with a through-hole (34) with a diameter that is larger than the screw head, and with a welded-on disk (36) that has a smaller through-hole (38).

11. The base frame according to claim 10, **characterized in that** a top side of the welded-on disk (36) forms a contact surface for a disk that increases the friction coefficient arranged between the wheel arm assembly and the counterweight (14).

12. The base frame according to claim 10 or 11, **characterized in that** the counterweight (14) has a recess (52, 56) that accommodates the welded-on disk (36).

13. The base frame according to claim 12, **characterized in that** a floor of the recess (52, 56) forms a contact surface for a disk that increases the friction coefficient arranged between the wheel arm assembly and the counterweight (14).

14. The base frame according to one of claims 1 to 13, **characterized in that** the counterweight (14) extends over the entire width of the base frame and/or **in that** the center of gravity of the counterweight (14) is arranged below the center of gravity of the wheel arm assembly and/or below a top edge of the wheel arms (10).

15. The base frame according to claims 1 to 14, **characterized in that** the counterweight (14) has attachment means for attaching a driver's cab (42) and/or a drive wheel carrier to the counterweight (14).

16. A reach truck comprising a base frame according to one of claims 1 to 15, in particular comprising a driver's cab (42) attached to the counterweight (14) and/or comprising a drive wheel carrier attached to the counterweight (14).

## Revendications

1. Cadre de base pour un chariot élévateur à mât déplaçable, comprenant
un module de bras de roue comportant deux bras de roue (10), lesquelles présentent respectivement un logement de bras de roue (12) à leurs extrémités arrière, et
un contrepoids (14) en fonte disposé à une extrémité avant des bras de roue (12) et relié au module de bras de roue par un certain nombre d'assemblages à vis, dans lequel
une première partie des assemblages à vis présente respectivement une direction longitudinale orientée dans une première direction, **caractérisé en ce que**
une deuxième partie des assemblages à vis présente respectivement une direction longitudinale orientée dans une deuxième direction différente de la première direction.

2. Cadre de base selon la revendication 1, **caractérisé en ce que** le module de bras de roue est un module soudé présentant une liaison transversale soudée avec les deux bras de roue (10).

3. Cadre de base selon la revendication 1 ou 2, **caractérisé en ce que** la première direction et la deuxième direction sont orientées orthogonalement l'une par rapport à l'autre.

4. Cadre de base selon l'une des revendications 1 à 3, **caractérisé en ce que** la première partie et/ou la deuxième partie des assemblages à vis sont conçus pour transmettre des forces transversalement à leur direction longitudinale respective.

5. Cadre de base selon l'une des revendications 1 à 4, **caractérisé en ce que** la première partie et/ou la deuxième partie des assemblages à vis sont conçus pour permettre une compensation des tolérances transversalement à leur direction longitudinale respective.

6. Cadre de base selon l'une des revendications 1 à 5, **caractérisé en ce que** l'un au moins des assemblages à vis présente une tige de serrage (24) disposée dans un alésage de passage du module de bras de roue et une vis (26) insérée dans la tige de serrage (24).

7. Cadre de base selon l'une des revendications 1 à 6, **caractérisé en ce que** l'un au moins des assemblages à vis présente un disque augmentant le coefficient de friction disposé entre le module de bras de roue et le contrepoids (14).

8. Cadre de base selon la revendication 2 ou la revendication 2 en combinaison avec l'une des revendications 3 à 7, **caractérisé en ce que** la liaison transversale présente une plaque de base (22) disposée horizontalement et/ou une barre transversale (20) disposée verticalement.

9. Cadre de base selon la revendication 8, **caractérisé en ce que** la première partie des assemblages à vis se trouve entre le contrepoids (14) et la barre transversale (20) et/ou **en ce que** la deuxième partie des assemblages à vis se trouve entre le contrepoids (14) et la plaque de base (22).

10. Cadre de base selon l'une des revendications 1 à 9, **caractérisé en ce que** l'un au moins des assemblages à vis présente une tête de vis disposée de manière noyée, dans lequel, à cet effet, le matériau du module de bras de roue est pourvu d'un alésage de passage (34) avec un diamètre supérieur à la tête de vis, et d'un disque soudé (36) présentant un plus petit alésage de passage (38).

11. Cadre de base selon la revendication 10, **caractérisé en ce qu'**une face supérieure du disque soudé (36) forme une surface de contact pour un disque augmentant le coefficient de friction disposé entre le module de bras de roue et le contrepoids (14).

12. Cadre de base selon la revendication 10 ou 11, **caractérisé en ce que** le contrepoids (14) présente un évidement (52, 56) recevant le disque soudé (36).

13. Cadre de base selon la revendication 12, **caractérisé en ce qu'**un fond de l'évidement (52, 56) forme une surface de contact pour un disque augmentant le coefficient de friction disposé entre le module de bras de roue et le contrepoids (14).

14. Cadre de base selon l'une des revendications 1 à 13, **caractérisé en ce que** le contrepoids (14) s'étend sur toute la largeur du cadre de base et/ou **en ce que** le point de gravité du contrepoids (14) est disposé sous le point de gravité du module de bras de roue et/ou sous un bord supérieur des bras de roue (10).

15. Cadre de base selon l'une des revendications 1 à 14, **caractérisé en ce que** le contrepoids (14) présente des moyens de fixation pour la fixation d'une cabine de conducteur (42) et/ou d'un support de roue d'entraînement au contrepoids (14).

16. Chariot élévateur à mât déplaçable comprenant un cadre de base selon l'une des revendications 1 à 15, comprenant en particulier une cabine de conducteur (42) fixée au contrepoids (14) et/ou un support de roue d'entraînement fixé au contrepoids (14).
